# EUROPÄISCHE PATENTSCHRIFT

(11) **EP 4 519 629 B1**
(45) Veröffentlichungstag und Bekanntmachung des Hinweises auf die Patenterteilung: **18.03.2026**
(21) Anmeldenummer: 23725132.7
(22) Anmeldetag: 03.05.2023
(51) Int. Cl.: B23Q 17/20, B23Q 17/24, G01B 11/00, G01B 11/24, G05B 19/401, B27C 1/12, B27C 1/14, B27M 3/00, B27M 3/18

(54) **BEARBEITUNGSVORRICHTUNG SOWIE VERFAHREN**
MACHINING DEVICE AND METHOD
DISPOSITIF ET PROCÉDÉ D'USINAGE

(30) Priorität: 05.05.2022 DE 102022111128
(43) Veröffentlichungstag der Anmeldung: 12.03.2025
(73) Patentinhaber: HOMAG GmbH, 72296 Schopfloch (DE)
(72) Erfinder: THUMM, Michael, 72149 Neustetten (DE)
(74) Vertreter: Hoffmann Eitle
(86) Internationale Anmeldenummer: PCT/EP2023/061659
(87) Internationale Veröffentlichungsnummer: WO 2023/213873

(56) Entgegenhaltungen:
- EP-A1- 3 540 699
- EP-A1- 3 546 163
- EP-A1- 3 659 765
- EP-B1- 0 108 260
- EP-B1- 3 453 503
- DE-A1- 102018 110 941
- DE-A1- 102021 130 857
- DE-A1- 102022 208 774
- DE-A1- 19 835 756
- DE-A1- 2 523 665

## Beschreibung

### Technisches Gebiet

Die Erfindung betrifft eine Bearbeitungsvorrichtung, die insbesondere zur Bearbeitung von Werkstücken aus Holz oder Holzwerkstoffen eingerichtet ist.

### Stand der Technik

Im Bereich der holzverarbeitenden Industrie sind Bearbeitungsmaschinen bekannt, mit denen plattenförmige Werkstücke in einer Durchlaufrichtung bewegt und während der Bewegung bearbeitet werden. Dabei ist es bekannt, eine Breite der Werkstücke punktuell zu ermitteln, um zu überprüfen, ob bei einer spanenden Bearbeitung einer Schmalfläche ein festgelegter Materialabtrag stattgefunden hat. Die EP3546163A offenbart den Oberbegriff des ersten Anspruches.

### Darstellung der Erfindung

Der Erfindung liegt die Aufgabe zugrunde, eine Bearbeitungsvorrichtung sowie ein Verfahren bereitzustellen, mit denen eine hohe Bearbeitungsqualität gewährleistet werden kann.

Anspruch 1 stellt eine solche Bearbeitungsvorrichtung bereit.

Weitere bevorzugte Ausführungsformen sind nachfolgend beschrieben oder in den abhängigen Ansprüchen aufgeführt.

Die Bearbeitungsvorrichtung ist zum Bearbeiten eines plattenförmigen Werkstücks eingerichtet und umfasst: eine erste Sensoreinrichtung zum Erfassen einer ersten Seite des Werkstücks, eine zweite Sensoreinrichtung zum Erfassen einer zweiten Seite des Werkstücks und eine Bewegungseinrichtung zum Herbeiführen einer Relativbewegung zwischen dem Werkstück und der ersten und zweiten Sensoreinrichtung derart, dass mittels der ersten Sensoreinrichtung ein Erfassen der ersten Seite des Werkstücks und mittels der zweiten Sensoreinrichtung ein Erfassen der zweiten Seite des Werkstücks erfolgen kann. Ferner umfasst die Bearbeitungsvorrichtung eine Steuereinrichtung, die mit der ersten und zweiten Sensoreinrichtung in Verbindung steht und eingerichtet ist, auf Grundlage des Erfassungsergebnisses der ersten und zweiten Sensoreinrichtung eine Ermittlung eines Verlaufs der ersten und zweiten Seite des Werkstücks entlang der Länge des Werkstücks durchzuführen, ferner umfassend ein oder mehrere Bearbeitungseinrichtungen zum Bearbeiten der ersten und/oder zweiten Seite des Werkstücks ,wobei die erste und zweite Sensoreinrichtung nachrangig zu der zumindest einen Bearbeitungseinrichtung angeordnet sind.

Die erfindungsgemäße Bearbeitungsvorrichtung hat unter anderem den Vorteil, dass der Nutzer insbesondere in der Einfahrphase einer solchen Bearbeitungsvorrichtung unterstützt und somit eine hohe Bearbeitungsqualität sichergestellt werden kann. Es können zudem Messprotokolle erstellt und dokumentiert werden. Ferner können Daten über die real produzierte Qualität ermittelt werden. Ferner ist es möglich, den Verlauf der Qualität über die Maschinenlebenszeit auf Grundlage des Erfassungsergebnisses zu überwachen. Somit kann beispielsweise ermittelt werden, wann die Qualität der einzelnen Verschleißkomponenten der Bearbeitungsvorrichtung nachlässt und wann zum Beispiel eine bestimmte Komponente, wie eine Förderkette/Transportkette, zu wechseln ist.

Der Nutzer der Bearbeitungsvorrichtung kann eine automatisierte Qualitätskontrolle der Werkstücke sowie der Bearbeitungsvorrichtung selbst vornehmen.

Zudem kann die Qualität der Maschinengrundeinstellung erhöht werden, und dieses qualitativ hochwertige Ergebnis wird in einer wesentlich kürzeren Zeit erreicht. Dabei ist es möglich, diese Einstellung zu dokumentieren und mit einem späteren Maschinenzustand beispielweise nach Produktionsstart zu vergleichen.

Gemäß einer bevorzugten Ausführungsform ist es vorgesehen, dass die erste Sensoreinrichtung und/oder die zweite Sensoreinrichtung ein taktiles Sensorelement umfasst oder umfassen. Demnach wird das Werkstück berührend abgetastet. Eine solche Ausgestaltung ist weniger anfällig für Störeinflüsse, wie beispielsweise punktuelle Bearbeitungsrückstände oder Poren in der abzutastenden Werkstückfläche.

Gemäß einer weiteren Ausführungsform ist es vorgesehen, dass die Bewegungseinrichtung eine Transporteinrichtung zum Bewegen des Werkstücks ist. Mit einer sogenannten Durchlaufmaschine können relativ hohe Stückzahlen gefertigt werden. In diesem Zusammenhang ist es ferner bevorzugt, dass die Transporteinrichtung eine Förderkette ist.

Die Steuereinrichtung der Bearbeitungsvorrichtung kann eingerichtet sein, einen Abgleich der Erfassungsergebnisse durchzuführen, um die Geradheit der ersten und zweiten Seite, einen Winkel der ersten und zweiten Seite des Werkstücks relativ zur Richtung der Relativbewegung oder relativ zur jeweils anderen Seite des Werkstücks zu ermitteln.

Die zweite Sensoreinrichtung kann während eines Erfassungsvorgangs zur Richtung der Relativbewegung bewegbar sein, um eine Anpassung an eine sich verändernde Werkstückbreite vorzunehmen.

Es ist bevorzugt, dass die zweite Sensoreinrichtung durch eine Verstellung der Bearbeitungsvorrichtung für eine Werkstückbreiten-Einstellung bewegbar ist. Somit ist die zweite Sensoreinrichtung gemäß dieser Ausführungsform an einem bewegbaren Maschinenteil angebracht. Das Maschinenteil kann bewegt werden, um eine Anpassung an eine bestimmte Werkstückbreite vorzunehmen. Die Position der zweiten Sensoreinrichtung wird insbesondere im Zusammenhang mit einer Positionsänderung einer Ausrichteinrichtung, an der das Werkstück ausgerichtet wird, verändert.

Es ist bevorzugt, dass die Bearbeitungsvorrichtung ferner eine erste Erfassungseinrichtung, die vorrangig zur ersten Sensoreinrichtung angeordnet ist, und eine zweite Erfassungseinrichtung, die nachrangig zur zweiten Sensoreinrichtung angeordnet ist, umfasst.

"Vorrangig" meint in diesem Zusammenhang, dass eine Erfassung des Werkstücks mittels der ersten Erfassungseinrichtung im Verfahrensablauf vor der ersten Sensoreinrichtung erfolgt. Ist die die Bewegungseinrichtung als eine Transporteinrichtung zum Bewegen des Werkstücks ausgebildet, so ist die erste Erfassungseinrichtung in Durchlaufrichtung vor der ersten Sensoreinrichtung angeordnet. "Nachrangig" bedeutet entsprechend, dass eine Erfassung des Werkstücks mittels der zweiten Erfassungseinrichtung im Verfahrensablauf nach der zweiten Sensoreinrichtung erfolgt.

Die zweite Erfassungseinrichtung ist eingerichtet, eine zwei Förderketten umfassende Transporteinrichtung zum Bewegen des Werkstücks am Auslauf der Bearbeitungsvorrichtung zu erfassen und Unterbrechungssignale der Transporteinrichtung aufzuzeichnen. Ferner ist die Steuereinrichtung eingerichtet, die resultierende mittlere Differenz zwischen Unterbrechungssignalen durch Verstellen zumindest einer der Förderketten auszugleichen und die die zwei Förderketten umfassende Transporteinrichtung mit der ersten Erfassungseinrichtung am Einlauf der Bearbeitungsvorrichtung zu erfassen und die mögliche Abweichung zu korrigieren.

Gemäß einer Ausführungsform kann die Transporteinrichtung bei einer doppelseitigen Maschine linksseitig und rechtssteitig angebracht sein.

Es ist bevorzugt, dass die Bearbeitungsvorrichtung eine erste Ausrichteinrichtung zum Ausrichten des Werkstücks an der ersten Seite aufweist. Gemäß einer weiteren Ausführungsform verfügt die Bearbeitungsvorrichtung über eine zweite Ausrichteinrichtung zum Ausrichten des Werkstücks an der zweiten Seite des Werkstücks.

Ferner wird erfindungsgemäß ein Verfahren zum Betrieb einer Bearbeitungsvorrichtung bereitgestellt. Im Rahmen des Verfahrens können Merkmale der zuvor beschriebenen Vorrichtung zum Einsatz kommen, und umgekehrt. Bezüglich der Vorteile des Verfahrens wird auf die obigen Erläuterungen und die nachfolgende Beschreibung verwiesen.

Das Verfahren umfasst die Schritte: Herbeiführen einer Relativbewegung zwischen dem Werkstück und einer ersten und zweiten Sensoreinrichtung derart, dass mittels der ersten Sensoreinrichtung ein Erfassen der ersten Seite des Werkstücks und mittels der zweiten Sensoreinrichtung ein Erfassen der zweiten Seite des Werkstücks erfolgt, wobei auf Grundlage des Erfassungsergebnisses der ersten und zweiten Sensoreinrichtung entlang der Länge des Werkstücks eine Ermittlung einer Kontur der ersten und zweiten Seite des Werkstücks durchgeführt wird, wobei die Bearbeitungsvorrichtung ein oder mehrere Bearbeitungseinrichtungen zum Bearbeiten der ersten und/oder zweiten Seite des Werkstücks, wobei die erste und zweite Sensoreinrichtung nachrangig zu der zumindest einen Bearbeitungseinrichtung angeordnet sind.

Gemäß einer Ausführungsform umfasst das Verfahren den folgenden Schritt: Abgleichen der Erfassungsergebnisse, um die Geradheit der ersten und zweiten Seite, einen Winkel der ersten und zweiten Seite des Werkstücks relativ zur Richtung der Relativbewegung oder relativ zur jeweils anderen Seite des Werkstücks zu ermitteln. Somit kann beispielsweise die Geradheit einer bearbeiteten Seite und die Parallelität der beiden gegenüberliegend erfassten Seiten erfasst und beurteilt werden.

Gemäß einer weiteren Ausführungsform, die in Kombination mit dem zuvor beschriebenen Verfahren, durchgeführt wird, wird ein Verfahren zum Betrieb einer Bearbeitungsvorrichtung bereitgestellt, welches Verfahrens die folgenden Schritte umfasst: Erfassen einer zwei Förderketten umfassenden Transporteinrichtung zum Bewegen des Werkstücks mit einer zweiten Erfassungseinrichtung am Auslauf der Bearbeitungsvorrichtung und Aufzeichnen von Unterbrechungssignalen der Transporteinrichtung, Ausgleichen der resultierenden mittlere Differenz zwischen den Unterbrechungssignalen durch Verstellen zumindest einer der Förderketten, Erfassen der zwei Förderketten umfassenden Transporteinrichtung mit der ersten Erfassungseinrichtung am Einlauf der Bearbeitungsvorrichtung und Korrigieren der Abweichungen. Im Rahmen des Verfahrens kann eine Bearbeitungsvorrichtung gemäß einem der zuvor beschriebenen Aspekte zum Einsatz kommen. Wird das Verfahren mit dem zuvor beschriebenen Verfahren kombiniert, so ist es bevorzugt, dass das hier genannte Verfahren zuerst ausgeführt wird, insbesondere um die Bearbeitungsvorrichtung einzustellen.

In diesem Zusammenhang ist es möglich, die Kettenlängen zu erfassen und durch Spannen einer Transportkette/Förderkette die Kettenlängen anzugleichen.

Im Rahmen des Erfassens der zwei Förderketten umfassenden Transporteinrichtung mit der ersten Erfassungseinrichtung können eine Förderkette oder zwei Förderketten erfasst werden. Wenn das Ausgleichen der resultierenden mittleren Differenz noch nicht alle Fehler beseitigt hat, dann könnte das Ausgleichen von einzelnen Nocken das Ergebnis noch verbessern.

Die Unterbrechungssignale können sich insbesondere aus der Position von Nocken der Transporteinrichtung, die insbesondere als Förderkette ausgebildet ist, ergeben. Die stehen von der Förderkette hervor.

### Kurze Beschreibung der Zeichnungen

Weitere Merkmale und Vorteile ergeben sich aus der nachfolgenden Beschreibung von Ausführungsformen unter Bezugnahme auf die beiliegenden Zeichnungen. Von diesen Zeichnungen zeigt:

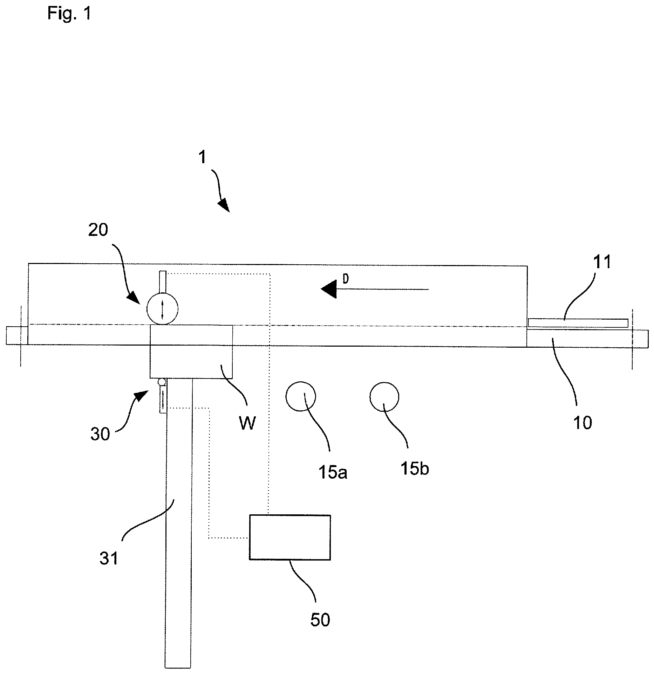

- Fig. 1: eine schematische Draufsicht einer ersten Ausführungsform.
- Fig. 2: eine schematische Draufsicht einer Modifikation der ersten Ausführungsform.
- Fig. 3: eine schematische Draufsicht einer zweiten Ausführungsform.

### Beschreibung von Ausführungsformen

Gleiche Bezugszeichen, die in verschiedenen Figuren aufgeführt sind, benennen identische, einander entsprechende, oder funktionell ähnliche Elemente.

Gemäß einer ersten Ausführungsform wird eine Bearbeitungsvorrichtung 1 zum Bearbeiten eines plattenförmigen Werkstücks aus Holz oder Holzwerkstoffen bereitgestellt. Bei einem solchen Werkstück kann es sich beispielsweise um eine Möbelkomponente, ein Fußboden- oder Deckenpaneel, eine Küchenarbeitsplatte oder Ähnliches handeln.

Die Bearbeitungsvorrichtung 1 umfasst eine erste Sensoreinrichtung 20, die zum Erfassen einer ersten Seite (Schmalfläche) eines Werkstücks W eingerichtet ist. Die erste Sensoreinrichtung 20 umfasst eine Rolle, die auf der ersten Seite des Werkstücks abrollt und somit eine Erfassung entlang der Länge des Werkstücks W durchführt.

Gegenüberliegend der ersten Sensoreinrichtung 20 ist eine zweite Sensoreinrichtung 30 vorgesehen, die eingerichtet ist, eine zweite Seite des Werkstücks W zu erfassen. Hierzu umfasst die zweite Sensoreinrichtung 30 ebenso eine Rolle, die mit der zweiten Seite des Werkstücks W in Kontakt kommt und entlang der zweiten Seite des Werkstücks abrollt.

Um eine Relativbewegung zwischen dem Werkstück und der ersten/zweiten Sensoreinrichtung 20, 30 bereitzustellen, umfasst die Bearbeitungsvorrichtung 1 eine Transporteinrichtung (insbesondere eine Förderkette/Transportkette), mit der das plattenförmige Werkstück W aufgenommen und in einer Durchlaufrichtung bewegt werden kann.

Ferner umfasst die Bearbeitungsvorrichtung 1 eine Steuereinrichtung 50, die mit der ersten Sensoreinrichtung 20 sowie der zweiten Sensoreinrichtung 30 in Verbindung steht. Die Steuereinrichtung 50 umfasst ein Programm, mit dem die Erfassungsergebnisse der ersten Steuereinrichtung 20 und der zweiten Steuereinrichtung 30 verarbeitet werden können.

Insbesondere werden die Erfassungsergebnisse derart aufbereitet, dass ein Verlauf der ersten und zweiten Seite des Werkstücks erstellt werden kann. Im Verlauf entlang der Länge des Werkstücks wird hierbei eine Ausrichtung der ersten/zweiten Seite des Werkstücks W relativ zur Durchlaufrichtung D ermittelt.

Auf diese Weise ist es möglich, eine mögliche Abweichung des Winkels einer Seite des Werkstücks W zu ermitteln. Auch können die Messsignale der ersten und zweiten Sensoreinrichtung genutzt werden, um die Ist-Breite des Werkstücks entlang des Verlaufs des Werkstücks zu ermitteln. Beide Messsignale in zeitlicher Durchlaufrichtung miteinander abgeglichen, ergeben die Parallelität des Werkstücks. Ferner können beide Messsignale in Durchlaufrichtung D jeweils für sich als Differenzbetrachtung dem Winkelfehler der ersten und zweiten Seite des gemessenen Werkstücks ergeben, unter der Annahme, dass das Werkstück W an der Position der Winkelvermessung rechtwinklig zur Vorschubrichtung auf der/dem Ketten liegt und zu dem die Geradheit des Formatschnitts gewährleistet ist.

Die Bearbeitungsvorrichtung 1 umfasst ein erstes Bearbeitungswerkzeug 15a sowie ein zweites Bearbeitungswerkzeug 15b, die derart angeordnet sind, dass eine zweite Seite des Werkstücks W mit den Bearbeitungswerkzeugen 15a, 15b spanend bearbeitet werden kann. Insbesondere handelt es sich bei den Bearbeitungswerkzeugen 15a, 15b um Fräser.

Ferner umfasst die Bearbeitungsvorrichtung eine Ausrichteinrichtung 11, die derart angeordnet ist, dass das Werkstück W an seiner ersten Seite mit der Ausrichteinrichtung 11 in Kontakt kommt und entsprechend vor der Bearbeitung durch die Bearbeitungswerkzeuge 15a, 15b an der ersten Seite ausgerichtet werden kann.

Die zweite Sensoreinrichtung 30 der Bearbeitungsvorrichtung 1 ist entlang einer Führung 31 senkrecht zur Durchlaufrichtung D bewegbar, sodass die zweite Sensoreinrichtung 30 an unterschiedlich breite Werkstücke angepasst und entsprechend positioniert werden kann. Die Positionierung der zweiten Sensoreinrichtung 30 kann während eines Durchlaufs des Werkstücks W durch die Bearbeitungsvorrichtung 1 erfolgen.

Im Betrieb der Bearbeitungsvorrichtung 1 wird das Werkstück W mit der Transporteinrichtung 10 in Durchlaufrichtung D bewegt und zunächst an der Ausrichteinrichtung 11 ausgerichtet. Nachfolgend gelangt das Werkstück W in den Bereich der Bearbeitungseinrichtungen 15a, 15b und wird an der zweiten Seite bearbeitet.

Nach Durchführung der Bearbeitung wird das Werkstück weiter in Durchlaufrichtung D bewegt und kommt mit der ersten Sensoreinrichtung 20 in Kontakt. Ferner wird die zweite Sensoreinrichtung 30 entlang der Führung 31 zugestellt, sodass auch die zweite Seite des Werkstücks W abgetastet werden kann. Während einer Bewegung des Werkstücks W in Durchlaufrichtung D werden somit die erste Seite mit der ersten Sensoreinrichtung 20 und die zweite Seite mit der zweiten Sensoreinrichtung 30 abgetastet und die ermittelten Messergebnisse an die Steuereinrichtung 50 übertragen. Somit kann eine mögliche Abweichung des Winkels der ersten und zweiten Seite des Werkstücks W von einer zur Durchlaufrichtung D parallelen Richtung ermittelt werden. Auch können die Messsignale der ersten und zweiten Sensoreinrichtung 20, 30 genutzt werden, um die Parallelität und die Ist-Breite des Werkstücks W entlang des Verlaufs des Werkstücks W zu ermitteln.

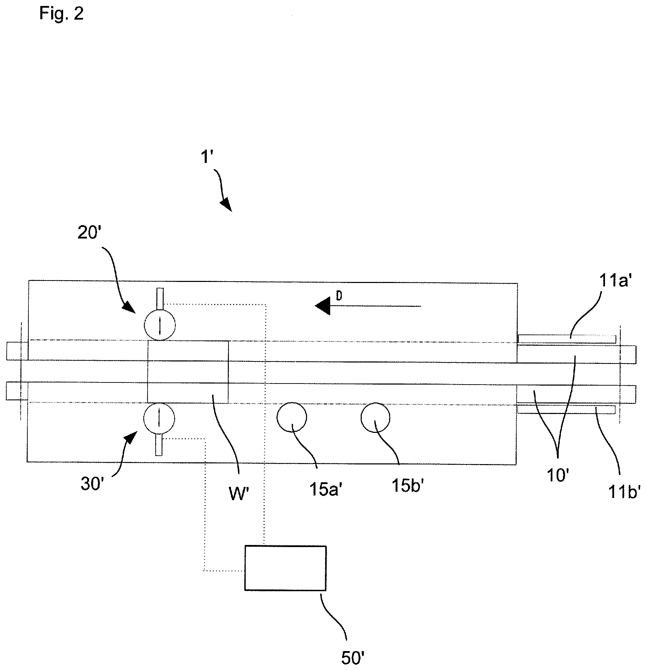

Fig. 2 zeigt eine Modifikation einer Bearbeitungsvorrichtung 1' zum Bearbeiten von plattenförmigen Werkstücken. Die Komponenten der Bearbeitungsvorrichtung 1', die ähnlich oder entsprechend zu denjenigen der Bearbeitungsvorrichtung 1 gemäß der ersten Ausführungsform ausgebildet sind, sind mit ähnlichen Bezugszeichen versehen. Ergänzend zu den nachfolgenden Erläuterungen wird auch auf die Ausführungen zur ersten Ausführungsform verwiesen.

Insbesondere umfasst die Bearbeitungseinrichtung 1' eine Transporteinrichtung 10', die vorliegend aus zwei parallel zueinander angeordneten Förderketten ausgebildet ist. Ferner sind im Einlaufbereich der Bearbeitungsvorrichtung 1' eine erste Ausrichteinrichtung 11a' sowie eine zweite Ausrichteinrichtung 11b' vorgesehen, um das Werkstück W' beim Einlauf in die Bearbeitungsvorrichtung 1', jeweils abschnittsweise, an beiden Seiten auszurichten.

Ähnlich wie die Bearbeitungsvorrichtung 1 der ersten Ausführungsform umfasst auch die Bearbeitungsvorrichtung 1' eine erste Bearbeitungsvorrichtung 15a' und eine zweite Bearbeitungseinrichtung 15b', die in Durchlaufrichtung D nacheinander angeordnet sind. Ferner ist eine erste Sensoreinrichtung 20' sowie eine zweite Sensoreinrichtung 30' vorgesehen, wobei die Sensoreinrichtungen mit einer Steuereinrichtung 50' in Verbindung stehen.

Die erste Sensoreinrichtung 20' ist im Wesentlichen gleich der Sensoreinrichtung 20 der ersten Ausführungsform ausgebildet. Die zweite Sensoreinrichtung 30' ist ähnlich der ersten Sensoreinrichtung 20' ausgebildet.

Die Steuereinrichtung 50' umfasst ein Programm, mit dem die Erfassungsergebnisse der ersten Steuereinrichtung 20' und der zweiten Steuereinrichtung 30' verarbeitet werden können. Die Verarbeitung der Erfassungsergebnisse der ersten Steuereinrichtung 20' und der zweiten Steuereinrichtung 30' erfolgt ähnlich derjenigen der ersten Ausführungsform, sodass auf die obigen Erläuterungen verwiesen wird.

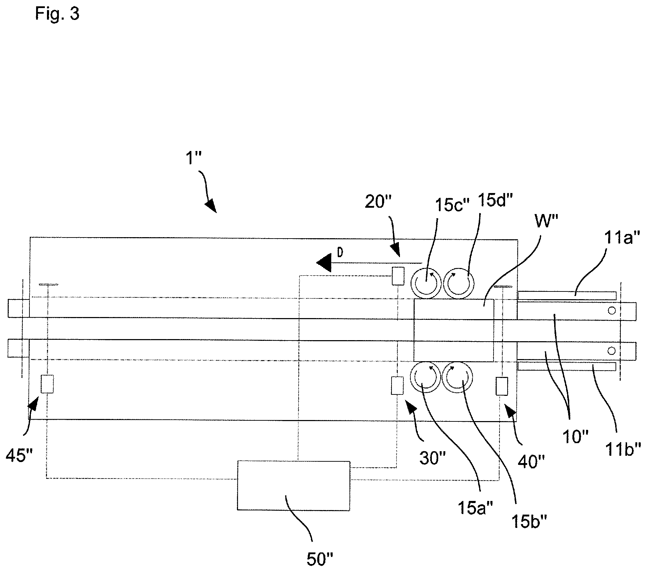

Fig. 3 zeigt eine zweite Ausführungsform einer Bearbeitungsvorrichtung 1". Komponenten, die ähnlich der ersten und/oder zweiten Ausführungsform ausgebildet sind, sind mit ähnlichen Bezugszeichen versehen.

Die Bearbeitungsvorrichtung 1" umfasst eine Transporteinrichtung 10", die ähnlich wie in der Modifikation der ersten Ausführungsform (Fig. 2) durch zwei parallel zueinander angeordnete Förderketten ausgebildet ist. Im Einlaufbereich der Maschine befindet sich eine erste Ausrichteinrichtung 11a" sowie eine zweite Ausrichteinrichtung 11b", Somit kann ein in Durchlaufrichtung D bewegtes Werkstück W", jeweils abschnittsweise, an beiden Seiten ausgerichtet werden.

Die Bearbeitungsvorrichtung 1" ist als beidseitige Bearbeitungsvorrichtung ausgebildet, und umfasst demnach eine erste Bearbeitungseinrichtung 15a" sowie eine zweite Bearbeitungsvorrichtung 15b", die eingerichtet sind, eine zweite Seite eines Werkstücks W" zu bearbeiten. An einer gegenüberliegenden Seite sind eine dritte Bearbeitungseinrichtung 15c" sowie eine vierte Bearbeitungseinrichtung 15d" vorgesehen, die eingerichtet sind, eine erste Seite des Werkstücks W" zu bearbeiten.

Ähnlich wie bei der ersten und zweiten Ausführungsform ist ferner eine erste Sensoreinrichtung 20" vorgesehen, die zum Erfassen einer ersten Seite des Werkstücks W" und einer zweiten Seite des Werkstücks W" eingerichtet sind. Die Sensoreinrichtungen 20" und 30" sind mit einer Steuereinrichtung 50" verbunden.

Ferner verfügt die Bearbeitungsvorrichtung 1" über eine erste Erfassungseinrichtung 40'', die in Durchlaufrichtung D betrachtet vorrangig zur ersten Sensoreinrichtung 20'' angeordnet ist. Im Bereich des Auslaufs der Bearbeitungsvorrichtung 1" ist eine zweite Erfassungseinrichtung 45" vorgesehen, die nachrangig zur zweiten Sensoreinrichtung 30" angeordnet ist. Die Erfassungseinrichtungen 40" und 45" sind als Laserlichtschranken ausgebildet und mit der Steuereinrichtung 50" verbunden. Die jeweilige Lichtschranke der Erfassungseinrichtungen 40'' und 45" ist rechtwinklig zur Durchlaufrichtung D eingestellt und die mit einem Reflektor versehene bewegbliche Seite ist verfahrbar. Der Laserfleck kann so eingestellt werden, dass er in die Mitte des Reflektors weist.

Die Erfassungseinrichtungen 40" und 45" können für die nachfolgend erläuterte zusätzliche Funktionalität der Bearbeitungsvorrichtung 1" eingesetzt werden:
Zuerst wird die zweite Erfassungseinrichtung 45" am Auslauf der Bearbeitungsvorrichtung 1" ausgewertet. Hierfür werden alle Nocken der Transporteinrichtung (Förderkette/Transportkette) 10" zuerst auf der ersten Maschinenseite angesteuert und dann auf der zweiten Maschinenseite angesteuert und die Ketten mit langsamer Geschwindigkeit ein Kettenumlauf lang durchgefahren. Die Unterbrechungssignale der zweiten Erfassungseinrichtung 45" wird pro Nocken links und rechts mit der jeweiligen Kettenposition aufgezeichnet.

Wir anhand der erfassten Nocken festgestellt, dass die Förderketten nicht gleichartig verlaufen, so kann eine Einzelverstellung an einer Nockenschraube einer jeweiligen Kette erfolgen. Nachfolgend wird wieder ein Messdurchlauf durchgeführt und im Zuge dessen werden die Unterbrechungssignale erfasst.

Anschließend werden die Daten miteinander abgeglichen und die mittlere Differenz von links zu rechts ausgewertet und zudem die einzelnen Differenzdaten visualisiert, um somit auszuschließen, dass ein Nockenpaar (zum Beispiel Nocken 3 links /rechts) verstellt wäre und somit das Messergebnis verfälscht. Die resultierende mittlere Differenz muss nun ausgeglichen werden, entweder manuell oder bei einer elektrischen Welle automatisiert durch Verdrehen/Umkalibrieren der Referenzpositionen der einzelnen Servoachsen der elektronischen Welle.

In diesem Zusammenhang kann ein Erfassen der Messdaten bereits in einem ersten Messdurchgang alle drei Ausgleichswerte errechnen und die Handlungsempfehlungen ableiten. Somit kann von der beschriebenen Reihenfolge abgewichen werden.

Anschließend wird die erste Erfassungseinrichtung 40" am Einlauf über eine neuerliche Messfahrt ausgewertet und die Abweichungen korrigiert. Dies kann ebenso entweder manuell oder automatisiert über die Kettenspannung oder über die vordere Welle (bei der elektrischen Welle auch am Einlauf kann auch dies automatisiert erfolgen).

Anschließend wird eine erneute Prüffahrt mit beiden Lichtschranken durchgeführt und die Werte protokolliert und visualisiert. Die Einstellung ist beendet, wenn die Abweichungen der vorderen Messung von der hinteren Messung kleiner als ein festgelegter Grenzwert werden. Die übrigen Differenzen der einzelnen Nockenpaare die konstant sind müssen je Nocken mechanisch einzeln ausgeglichen werden, da die grundsätzliche Ketteneinstellung entsprechend eingestellt ist.

Ebenfalls kann mit Hilfe der weiteren Sensoren (erste Sensoreinrichtung 20" und zweite Sensoreinrichtung 30") die Bauteilqualität der Maschinen-/Kettenqualität gegenübergestellt werden. Bezüglich der Funktionsweise der ersten Sensoreinrichtung 20" und zweiten Sensoreinrichtung 30" wird auf die Erläuterungen der ersten Ausführungsform sowie der genannten Modifikation verwiesen.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Bearbeitungsvorrichtung (1-1'') zum Bearbeiten eines plattenförmigen Werkstücks (W-W"), umfassend:
eine erste Sensoreinrichtung (20-20'') zum Erfassen einer ersten Seite des Werkstücks (W-W"),
eine zweite Sensoreinrichtung (30-30") zum Erfassen einer zweiten Seite des Werkstücks (W-W"),
eine Bewegungseinrichtung (10-10") zum Herbeiführen einer Relativbewegung zwischen dem Werkstück (W-W'') und der ersten und zweiten Sensoreinrichtung (20-20", 30-30") derart, dass mittels der ersten Sensoreinrichtung (20-20") ein Erfassen der ersten Seite des Werkstücks und mittels der zweiten Sensoreinrichtung (30-30") ein Erfassen der zweiten Seite des Werkstücks erfolgen kann, und
eine Steuereinrichtung (50-50''), die mit der ersten und zweiten Sensoreinrichtung (20-20", 30-30") in Verbindung steht und eingerichtet ist, auf Grundlage des Erfassungsergebnisses der ersten und zweiten Sensoreinrichtung (20-20", 30-30") eine Ermittlung eines Verlaufs der ersten und zweiten Seite des Werkstücks (W-W") entlang der Länge des Werkstücks durchzuführen,
ferner umfassend ein oder mehrere Bearbeitungseinrichtungen (15a-15a''; 15b-15b";15c", 15d") zum Bearbeiten der ersten und/oder zweiten Seite des Werkstücks (W-W"),
**gekennzeichnet dadurch, dass** die erste und zweite Sensoreinrichtung (20-20"; 30-30") nachrangig zu der zumindest einen Bearbeitungseinrichtung (15a-15a"; 15b-15b";15c", 15d") angeordnet sind.

2. Bearbeitungsvorrichtung (1-1") gemäß Anspruch 1, wobei die erste Sensoreinrichtung (20-20") und/oder die zweite Sensoreinrichtung (30-30") ein taktiles Sensorelement umfasst oder umfassen.

3. Bearbeitungsvorrichtung (1-1") gemäß einem der vorangegangenen Ansprüche, wobei die Bewegungseinrichtung (10-10") eine Transporteinrichtung zum Bewegen des Werkstücks ist,
wobei bevorzugt ist, dass die Transporteinrichtung eine Förderkette ist.

4. Bearbeitungsvorrichtung (1-1") gemäß einem der vorangegangenen Ansprüche, wobei die Steuereinrichtung (50-50") eingerichtet ist, einen Abgleich der Erfassungsergebnisse durchzuführen, um die Geradheit der ersten und zweiten Seite, einen Winkel der ersten und zweiten Seite des Werkstücks relativ zur Richtung der Relativbewegung oder relativ zur jeweils anderen Seite des Werkstücks zu ermitteln.

5. Bearbeitungsvorrichtung (1; 1") gemäß einem der vorangegangenen Ansprüche, wobei die zweite Sensoreinrichtung (30; 30") während eines Erfassungsvorgangs zur Richtung der Relativbewegung bewegbar ist.

6. Bearbeitungsvorrichtung (1') gemäß einem der Ansprüche 1-4, wobei die zweite Sensoreinrichtung (30') durch eine Verstellung der Bearbeitungsvorrichtung für eine Werkstückbreiten-Einstellung bewegbar ist.

7. Bearbeitungsvorrichtung (1") gemäß einem der vorangegangenen Ansprüche, ferner umfassend eine erste Erfassungseinrichtung (40"), die vorrangig zur ersten Sensoreinrichtung (20") angeordnet ist, und eine zweite Erfassungseinrichtung (45'') nachrangig zur zweiten Sensoreinrichtung (30") angeordnet ist.

8. Bearbeitungsvorrichtung (1-1") gemäß einem der vorangegangenen Ansprüche, wobei die Bearbeitungsvorrichtung (1-1") eine erste Ausrichteinrichtung (11, 11a'-11a") zum Ausrichten des Werkstücks an der ersten Seite aufweist,
wobei ferner bevorzugt ist, dass die Bearbeitungsvorrichtung (1'-1") eine zweite Ausrichteinrichtung (11b'-11b") zum Ausrichten des Werkstücks an der zweiten Seite aufweist.

9. Verfahren zum Betrieb einer Bearbeitungsvorrichtung (1-1"), umfassend:
Herbeiführen einer Relativbewegung zwischen dem Werkstück (W-W'') und einer ersten und zweiten Sensoreinrichtung (20-20", 30-30") derart, dass mittels der ersten Sensoreinrichtung (20-20'') ein Erfassen der ersten Seite des Werkstücks und mittels der zweiten Sensoreinrichtung (30-30") ein Erfassen der zweiten Seite des Werkstücks erfolgt,
wobei auf Grundlage des Erfassungsergebnisses der ersten und zweiten Sensoreinrichtung (20-20'', 30-30") entlang der Länge des Werkstücks eine Ermittlung einer Kontur der ersten und zweiten Seite des Werkstücks (W-W") durchgeführt wird,
wobei die Bearbeitungsvorrichtung (1-1") ein oder mehrere Bearbeitungseinrichtungen (15a-15a"; 15b-15b'';15c'', 15d'') zum Bearbeiten der ersten und/oder zweiten Seite des Werkstücks (W-W") aufweist
wobei die erste und zweite Sensoreinrichtung (20-20"; 30-30'') nachrangig zu der zumindest einen Bearbeitungseinrichtung (15a-15a''; 15b-15b";15c", 15d") angeordnet sind.

10. Verfahren gemäß Anspruch 9, ferner umfassend den Schritt:
Abgleichen der Erfassungsergebnisse, um die Geradheit der ersten und zweiten Seite, einen Winkel der ersten und zweiten Seite des Werkstücks relativ zur Richtung der Relativbewegung oder relativ zur jeweils anderen Seite des Werkstücks zu ermitteln.

11. Verfahren zum Betrieb einer Bearbeitungsvorrichtung (1") gemäß Anspruch 9 oder 10, umfassend die Schritte:
Erfassen einer zwei Förderketten umfassenden Transporteinrichtung (10") zum Bewegen des Werkstücks (W") mit einer zweiten Erfassungseinrichtung (45") am Auslauf der Bearbeitungsvorrichtung (1") und Aufzeichnen von Unterbrechungssignalen der Transporteinrichtung (10"),
Ausgleichen der resultierenden mittlere Differenz zwischen den Unterbrechungssignalen durch Verstellen zumindest einer der Förderketten,
Erfassen der zwei Förderketten umfassenden Transporteinrichtung (10") mit der ersten Erfassungseinrichtung (40") am Einlauf der Bearbeitungsvorrichtung (1") und Korrigieren der Abweichungen.

## Claims

1. Machining device (1-1") for machining a planar workpiece (W-W"), comprising:
a first sensor means (20-20") for detecting a first side of the workpiece (W-W"),
a second sensor means (30-30") for detecting a second side of the workpiece (W-W"),
a movement means (10-10") for bringing about a relative movement between the workpiece (W-W") and the first and second sensor means (20-20", 30-30'') in such a way that the first side of the workpiece can be detected by the first sensor means (20-20") and the second side of the workpiece can be detected by the second sensor means (30-30‴), and
a control means (50-50") which is connected to the first and second sensor means (20-20'', 30-30'') and is configured to determine a course of the first and second side of the workpiece (W-W") along the length of the workpiece based on the detection result of the first and second sensor means (20-20", 30-30"),
further comprising one or more machining means (15a-15a"; 15b-15b"; 15c", 15d") for machining the first and/or second side of the workpiece (W-W"),
**characterised in that** the first and second sensor means (20-20"; 30-30") are arranged subordinately to the at least one machining means (15a-15a"; 15b-15b''; 15c", 15d").

2. Machining device (1-1") according to claim 1,
wherein the first sensor means (20-20'') and/or the second sensor means (30-30") comprises or comprise a tactile sensor element.

3. Machining device (1-1") according to any of the preceding claims, wherein the movement means (10-10") is a transport means for moving the workpiece,
wherein it is preferred that the transport means is a conveyor chain.

4. Machining device (1-1") according to any of the preceding claims, wherein the control means (50-50") is configured to compare the detection results in order to determine the straightness of the first and second side, an angle of the first and second side of the workpiece relative to the direction of the relative movement or relative to the other side of the workpiece.

5. Machining device (1; 1") according to any of the preceding claims, wherein the second sensor means (30; 30") can be moved in the direction of the relative movement during a detection process.

6. Machining device (1') according to any of claims 1-4, wherein the sensor means (30') can be moved by adjusting the machining device for a workpiece width setting.

7. Machining device (1") according to any of the preceding claims, further comprising a first detection means (40") which is arranged subordinately to the first sensor means (20"), and a second detection means (45") is arranged subordinately to the sensor means (30").

8. Machining device (1-1") according to any of the preceding claims, wherein the machining device (1-1") has a first orientation means (11, 11a'-11a") for orienting the workpiece on the first side,
wherein it is further preferred that the machining device (1-1") has a second orientation means (11b', 11b") for orienting the workpiece on the second side.

9. Method for operating a machining device (1-1"), comprising:
bringing about a relative movement between the workpiece (W-W") and a first and second sensor means (20-20", 30-30") in such a way that the first side of the workpiece is detected by the first sensor means (20-20") and the second side of the workpiece is detected by the second sensor means (30-30"),
wherein a contour of the first and second side of the workpiece (W-W") is determined along the length of the workpiece based on the detection result of the first and second sensor means (20-20", 30-30"),
wherein the machining device (1-1'') has one or more machining means (15a-15a''; 15b-15b"; 15c", 15d") for machining the first and/or second side of the workpiece (W-W"),
wherein the first and second sensor means (20-20"; 30-30") are arranged subordinately to the at least one machining means (15a-15a"; 15b-15b''; 15c", 15d").

10. Method according to claim 9, further comprising the step of:
comparing the detection results in order to determine the straightness of the first and second side, an angle of the first and second side of the workpiece relative to the direction of the relative movement or relative to the other side of the workpiece.

11. Method for operating a machining device (1") according to claim 9 or 10, comprising the steps of:
detecting a transport means (10") comprising two conveyor chains for moving the workpiece (W'') using a second detection means (45") at the outlet of the machining device (1") and recording interruption signals of the transport means (10"),
compensating for the resulting average distance between the interruption signals by adjusting at least one of the conveyor chains,
detecting the transport means (10") comprising two conveyor chains using the first detection means (40") at the inlet of the machining device (1") and correcting the deviations.

## Revendications

1. Dispositif d'usinage (1-1") pour usiner une pièce à usiner (W-W") en forme de plaque, comprenant :
un premier appareil capteur (20-20") pour détecter un premier côté de la pièce à usiner (W-W"),
un second appareil capteur (30-30") pour détecter un second côté de la pièce à usiner (W-W"),
un appareil de déplacement (10-10") pour provoquer un mouvement relatif entre la pièce à usiner (W-W") et le premier et second appareil capteur (20-20", 30-30") de sorte qu'une détection du premier côté de la pièce à usiner puisse être effectuée au moyen du premier appareil capteur (20-20") et qu'une détection du second côté de la pièce à usiner puisse être effectuée au moyen du second appareil capteur (30-30"), et
un appareil de commande (50-50") qui est connecté au premier et second appareil capteur (20-20", 30-30") et configuré pour réaliser, sur la base du résultat de détection du premier et second appareil capteur (20-20", 30-30"), une détermination d'un tracé du premier et second côté de la pièce à usiner (W-W") le long de la longueur de la pièce à usiner,
comprenant en outre un ou plusieurs appareils d'usinage (15a-15a" ; 15b-15b" ; 15c", 15d") pour usiner la première et/ou seconde face de la pièce à usiner (W-W"),
**caractérisé en ce que**
les premier et second appareils capteurs (20-20" ; 30-30") sont disposés de manière subordonnée par rapport à l'au moins un appareil d'usinage (15a-15a" ; 15b-15b" ; 15c", 15d").

2. Dispositif d'usinage (1-1") selon la revendication 1, dans lequel le premier appareil capteur (20-20") et/ou le second appareil capteur (30-30") comprend ou comprennent un élément capteur tactile.

3. Dispositif d'usinage (1-1") selon l'une quelconque des revendications précédentes, dans lequel l'appareil de déplacement (10-10") est un appareil de transport pour déplacer la pièce à usiner,
dans lequel il est préférable que l'appareil de transport soit une chaîne de convoyage.

4. Dispositif d'usinage (1-1") selon l'une quelconque des revendications précédentes, dans lequel l'appareil de commande (50-50") est configuré pour réaliser une comparaison des résultats de détection afin de déterminer la rectitude du premier et second côté, un angle du premier et second côté de la pièce à usiner par rapport à la direction du mouvement relatif ou par rapport à l'autre côté de la pièce à usiner.

5. Dispositif d'usinage (1 ; 1") selon l'une quelconque des revendications précédentes, dans lequel le second appareil capteur (30 ; 30") peut être déplacé dans la direction du mouvement relatif pendant un processus de détection.

6. Dispositif d'usinage (1') selon l'une quelconque des revendications 1 à 4, dans lequel le second appareil capteur (30') est mobile au moyen d'un réglage du dispositif d'usinage pour un ajustement de la largeur de la pièce à usiner.

7. Dispositif d'usinage (1") selon l'une quelconque des revendications précédentes, comprenant en outre un premier appareil de détection (40"), qui est disposé de manière prioritaire par rapport au premier appareil capteur (20"), et un second appareil de détection (45") est disposé de manière subordonnée par rapport au second appareil capteur (30").

8. Dispositif d'usinage (1-1") selon l'une quelconque des revendications précédentes, dans lequel le dispositif d'usinage (1-1") présente un premier appareil d'alignement (11, 11a'-11a") pour aligner la pièce à usiner sur le premier côté, dans lequel il est en outre préférable que le dispositif d'usinage (1'-1") présente un second appareil d'alignement (11b'-11b") pour aligner la pièce à usiner sur le second côté.

9. Procédé pour faire fonctionner un dispositif d'usinage (1-1"), comprenant :
le fait de provoquer un mouvement relatif entre la pièce à usiner (W-W") et un premier et second appareil capteur (20-20", 30-30") de sorte qu'une détection du premier côté de la pièce à usiner soit effectuée au moyen du premier appareil capteur (20-20") et une détection du second côté de la pièce à usiner au moyen du second appareil capteur (30-30"),
dans lequel une détermination d'un contour du premier et second côté de la pièce à usiner (W-W") est réalisée sur la base du résultat de détection du premier et second appareil capteur (20-20", 30-30") le long de la longueur de la pièce à usiner,
dans lequel le dispositif d'usinage (1-1") présente un ou plusieurs appareils d'usinage (15a-15a" ; 15b-15b" ; 15c", 15d") pour usiner le premier et/ou second côté de la pièce à usiner (W-W"),
dans lequel les premier et second appareils capteurs (20-20" ; 30-30") sont disposés de manière subordonnée par rapport à l'au moins un appareil d'usinage (15a-15a" ; 15b-15b" ; 15c", 15d").

10. Procédé selon la revendication 9, comprenant en outre l'étape suivante :
la comparaison des résultats d'acquisition pour déterminer la rectitude du premier et du second côté, un angle du premier et second côté de la pièce à usiner par rapport à la direction du mouvement relatif ou par rapport à l'autre côté de la pièce à usiner.

11. Procédé pour faire fonctionner un dispositif d'usinage (1") selon la revendication 9 ou la revendication 10, comprenant les étapes suivantes :
la détection d'un appareil de transport (10") comprenant deux chaînes de convoyage pour déplacer la pièce à usiner (W") avec un second appareil de détection (45") à la sortie du dispositif d'usinage (1") et l'enregistrement de signaux d'interruption de l'appareil de transport (10"),
la compensation de la différence moyenne résultante entre les signaux d'interruption par réglage au moins d'une des chaînes de convoyage,
la détection de l'appareil de transport (10") comprenant deux chaînes de convoyage avec le premier appareil de détection (40") à l'entrée du dispositif d'usinage (1") et la correction des écarts.
